# EUROPÄISCHE PATENTSCHRIFT

(11) **EP 2 894 063 B1**
(45) Veröffentlichungstag und Bekanntmachung des Hinweises auf die Patenterteilung: **18.07.2018**
(21) Anmeldenummer: 14150809.3
(22) Anmeldetag: 10.01.2014
(51) Int. Cl.: B60P 7/15, B62D 25/20, B60P 7/08

(54) **Bodenbelag für einen Nutzfahrzeugboden, Nutzfahrzeugboden, Nutzfahrzeug sowie Verfahren zur Herstellung eines Bodenbelags**
Floor covering for a commercial vehicle floor, commercial vehicle floor, commercial vehicle and method for manufacturing a floor covering
Revêtement de sol pour un plancher de véhicule utilitaire, plancher de véhicule utilitaire, véhicule utilitaire et procédé de fabrication d'un revêtement de plancher

(43) Veröffentlichungstag der Anmeldung: 15.07.2015
(73) Patentinhaber: Schmitz Cargobull AG, 48341 Altenberge (DE)
(72) Erfinder: Qweider, Samir, 48703 Stadtlohn (DE)
(74) Vertreter: Cohausz & Florack

(56) Entgegenhaltungen:
- EP-A2- 2 505 460
- WO-A1-98/56614
- DE-A1- 19 802 807
- US-A- 2 954 003
- US-A- 6 022 062
- US-B1- 6 644 721

## Beschreibung

Die Erfindung betrifft einen Bodenbelag für einen Boden eines Nutzfahrzeugs. Der Bodenbelag ist dabei als Flachprodukt ausgebildet. In die freie Oberseite des Bodenbelags ist durch ein formgebendes Verfahren ein Rippenprofil eingeprägt, das aus benachbart und mit Abstand zueinander verlaufenden Rippen gebildet ist, wobei zueinander benachbarte Rippen zwischen sich jeweils ein Tal seitlich begrenzen.

Ebenso betrifft die Erfindung einen Nutzfahrzeugboden, der einen solchen Bodenbelag umfasst, ein mit einem derartigen Nutzfahrzeugboden ausgestattetes Nutzfahrzeug und ein Verfahren zur Herstellung eines Bodenbelags der hier in Rede stehenden Art.

Ein typisches Beispiel für einen Nutzfahrzeugaufbau ist in der DE 198 02 807 A1 und in US6022062
beschrieben. Bei diesem Kofferaufbau für ein Nutzfahrzeug ist ein Bodenbelag mit in seiner Ober- und Unterseite eingeformten Rippenstrukturen vorgesehen. Die Rippen und die zwischen den Rippen begrenzten Täler der Rippenstrukturen von Ober- und Unterseite stehen dabei in keinem Zusammenhang, sondern sind jeweils so ausgelegt, dass sie einerseits eine optimierte Belastbarkeit und andererseits eine optimierte Anbindung an die Tragstruktur des Bodens ermöglichen.

Bodenbeläge der hier in Rede stehenden Art werden insbesondere für Böden von bei Sattelaufliegern für Sattelzüge, Lastkraftwagen und Anhängern eingesetzt, die als Nutzfahrzeuge für den Transport von Lebensmitteln und anderen Waren eingesetzt werden. Bei den hier in Rede stehenden Nutzfahrzeugen kann es sich aber auch um andere konventionelle Lastkraftwagen oder Anhänger mit Aufbauten handeln, die einen Bodenbelag der hier in Rede stehenden Art aufweisen.

Um den beim Be- und Entladen des jeweiligen Nutzfahrzeugs auftretenden Belastungen standzuhalten, sind die Böden von Nutzfahrzeugen in der Regel zumindest im Bereich der Ladefläche, auf der das jeweils zu transportierende Gut abgestellt wird, mit einem aus einem strapazierfähigen, abriebfesten Material bestehenden Belag belegt, der beispielsweise aus einem Leichtmetallwerkstoff gefertigt ist. Einer der Vorteile der Verwendung von Bodenbelägen aus metallischen Werkstoffen besteht dabei darin, dass sich mit solchen Bodenbelägen die speziell bei zum Transport von Lebensmitteln und desgleichen dienenden Fahrzeugen bestehenden Anforderungen an die Hygiene gut einhalten lassen.

Das in die die Ladefläche bildende Oberseite des Bodenbelags eingeformte Rippenprofil gewährleistet einerseits eine hohe Standsicherheit des jeweils zu transportierenden Guts auf der Ladefläche. Andererseits erlaubt die Profilierung des Belags ein sicheres Begehen und Befahren der Ladefläche beim Be- und Entladen auch dann, wenn auf dem Bodenbelag Flüssigkeiten oder andere Rückstände vorhanden sind, durch die eine glatte, unprofilierte Fläche rutschig würde.

Als Beispiel für einen derart profilierten Boden ist die aus der FR 2 575 709 A1 bekannte Hubladeplattform für ein Nutzfahrzeug zu nennen. Die bekannte Hubladeplattform ist aus mehreren Metallprofilen zusammengesetzt, deren beim Be- und Endladen des Nutfahrzeugs befahrene Ladefläche jeweils durch in Längsrichtung des jeweiligen Profils parallel zueinander verlaufende Rippen strukturiert ist. Durch die so gebildete Rillenstruktur soll die Rutschsicherheit des Plattformbodens verbessert sein. In der Praxis ergibt sich durch die strikt parallele Ausrichtung der in den Boden eingeformten Rillen eine stark gerichtete Traktionseigenschaft eines solchen Bodens. Die gewünschte Rutschsicherheit besteht daher dort nur bei einer quer zum Verlauf der Rippen bzw. Rillen ausgerichteten Bewegung.

Ein anderes Beispiel für einen mit einer ebenfalls geradlinigen Rippenstruktur der voranstehend erläuterten Art profilierten Bodenbelag ist in der EP 2 505 460 A2 beschrieben. Die bei diesem Bodenbelag vorgesehene Rippenstruktur soll einen optimierten Gleitreibwert bieten.

Um die Richtungsabhängigkeit der Rutschsicherheit bei solchen Böden zu beseitigen, ist in der DE 297 06 089 U1 vorgeschlagen worden, in die Oberfläche des Bodens parallel zueinander und in regelmäßigen Abständen angeordnete Rippen einzuformen, die jedoch zusätzlich in ihrer Längsrichtung durch unregelmäßig eingebrachte Vertiefungen unterbrochen sind.

Eine vergleichbar segmentierte Rippenprofilierung der Oberfläche einer Plattform für Hubladebühnen für Kraftfahrzeuge ist auch in der EP 1 844 981 A1 beschrieben. Gemäß diesem Stand der Technik sind die Segmente der Profilierung derart versetzt zueinander angeordnet, dass insbesondere die Antriebsräder elektrischer Hubladevorrichtungen eine ausreichende Traktion aufbauen können. Durch die Segmentierung der Rippen lässt sich die Richtungsabhängigkeit der Rutschsicherheit deutlich vermindern.

Ein weiteres Beispiel für einen profilierten Bodenbelag eines Nutzfahrzeugs ist aus der US 6 022 062 bekannt. Der dort gezeigte Bodenbelag besteht aus einem thermoplastisch verformbaren Kunststoffmaterial, das in einer eine Rippenstruktur abbildenden Form unter Wärmezufuhr zu dem Bodenbelag geformt wird. Dabei werden in dem Bodenbelag abgesenkte Zonen ausgebildet, in denen die Kopfflächen der Rippen in Richtung der zwischen den Rippen jeweils vorhandenen Täler der Rippenstruktur abgesenkt sind. Im Gebrauch können in die abgesenkten Zonen des Bodenbelags fußartige Vorsprünge des jeweiligen Transportguts eingesetzt werden, um so eine in Längs- und Querrichtung des Bodenbelags formschlüssige Sicherung des Transportguts gegen Verrutschen zu erreichen.

Der heutige Standard bei Böden von Kühlfahrzeugen ist ein aus Aluminiumwerkstoff gefertigter Bodenbelag, an dessen Oberseite in Draufsicht gerstenkornartig ausgebildete Formsprünge ausgeformt sind. Die derart den Bodenbelag bildenden Aluminiumbleche werden auch als "Gerstenkornbleche" bezeichnet. Bei der Herstellung der Gerstenkornbleche wird das Gerstenkornmuster durch Umformwalzen in die Blechoberseite geprägt. Die Unterseite der Gerstenkornbleche bleibt dagegen eben. Auf diese Weise ist an der Unterseite des Gerstenkorn-Bodenbelags eine möglichst große ebene Fläche vorhanden, über die eine entsprechend großflächige Verklebung des Bodenblechs mit einer in der Regel aus Schichtholz gebildeten Tragschicht des jeweiligen Nutzfahrzeugbodens erfolgen kann.

Um den Laderaum des jeweiligen Nutzfahrzeugs zu unterteilen oder um innerhalb des Laderaums Anschläge oder andere Mittel zur Ladungssicherung bereitzustellen, werden Trennwände und so genannte Sperrstangen eingesetzt, die zwischen dem Boden und dem Dach des jeweiligen Nutzfahrzeugs verspannt werden. Die betreffenden Bauteile werden dazu in Höhenrichtung auseinander gefahren, bis sie mit für einen Halt ausreichenden Presskräften gegen Decke und Boden des Nutzfahrzeugs wirken. Um einen möglichst sicheren Stand auf dem Bodenbelag zu sichern, stehen die für diesen Zweck vorgesehenen Bauteile heute in der Regel mit mindestens einem gummierten Fuß auf dem jeweiligen Bodenbelag. Die Gummierung bewirkt eine hohe Haftreibung zwischen Gummi-Fuß und Bodenbelag. Infolgedessen halten die entspannten Bauteile auch hohen Querkräften stand, die auftreten können, wenn beispielsweise bei Kurvenfahrt ein an dem betreffenden Bauteil gesichertes Transportgut hohen Fliehkräften ausgesetzt ist.

Werden höhere Anforderungen an die Ladungssicherungen gestellt, können diese dadurch erfüllt werden, dass in den Boden gesonderte Zurrschienen oder Zurrösen eingebaut werden. In die Zurrschienen oder Zurrösen kann der jeweilige Fuß des zu verspannenden Bauteils formschlüssig greifen, so dass ein Verrutschen auch bei hohen Querkräften sicher vermieden ist. Allerdings müssen dafür Vertiefungen im Nutzfahrzeugboden in Kauf genommen werden, die nicht nur aufwändig herzustellen sind, sondern auch für Reinigung und Instandhaltung größeren Aufwand erfordern.

Vor dem Hintergrund des voranstehend erläuterten Standes der Technik bestand die Aufgabe der Erfindung darin, einen Bodenbelag für einen Nutzfahrzeugboden zu schaffen, der sich kostengünstig herstellen lässt und dabei optimierte Gebrauchseigenschaften insbesondere im Hinblick auf die Möglichkeit des Verspannens eines zur Ladungssicherung oder zur Unterteilung eines Nutzfahrzeugladeraums vorgesehenen Bauteils bietet.

Ebenso sollten ein Verfahren zur Herstellung eines solchen Bodenbelags, ein Nutzfahrzeugboden mit entsprechend optimierten Gebrauchseigenschaften sowie ein Nutzfahrzeug angegeben werden, bei dem es auf besonders einfache Weise möglich ist, zwischen Boden und Decke ein Bauteil zu verspannen, das seine Position im Betrieb auch bei hohen Belastungen sicher beibehält.

Erfindungsgemäß ist diese Aufgabe in Bezug auf den Bodenbelag für ein Nutzfahrzeug dadurch gelöst worden, dass ein solcher Bodenbelag die in Anspruch 1 genannten Merkmale besitzt.

In Bezug auf den Nutzfahrzeugboden besteht die erfindungsgemäße Lösung der oben genannten Aufgabe darin, dass ein solcher Nutzfahrzeugboden eine Trägerschicht und einen gemäß einem der voranstehenden Ansprüche ausgebildeten Bodenbelag umfasst, der mit seiner Unterseite auf die Trägerschicht aufgeklebt ist und dessen freie Oberseite eine Ladefläche für ein auf dem Nutzfahrzeugboden zu verstauendes Transportgut bildet.

Ein erfindungsgemäßes Nutzfahrzeug weist dementsprechend einen Kofferaufbau auf, der einen Laderaum umschließt, wobei der Boden des Nutzfahrzeugs durch einen erfindungsgemäß beschaffenen Nutzfahrzeugboden gebildet ist und wobei in dem Laderaum mindestens ein Bauteil vorgesehen ist, das einen Stützfuß aufweist, der an seiner Unterseite Ausnehmungen oder Erhebungen aufweist, die, wenn der Stützfuß auf eine der Rastenzonen an der freien Oberseite des Bodenbelags des Nutzfahrzeugbodens aufgesetzt ist, formschlüssig mit den in der jeweiligen Rastenzone ausgebildeten Rippenabschnitten zusammenwirkt.

Die erfindungsgemäße Lösung der oben genannten Erfindung besteht in Bezug auf das Herstellverfahren schließlich darin, dass bei der Herstellung eines erfindungsgemäßen Bodenbelags mindestens die in Anspruch 12 angegebenen Arbeitsschritte absolviert werden.

Vorteilhafte Ausgestaltungen der Erfindung sind in den abhängigen Ansprüchen angegeben und werden nachfolgend wie der allgemeine Erfindungsgedanke im Einzelnen erläutert.

Ein erfindungsgemäßer Bodenbelag für einen Boden eines Nutzfahrzeugs ist demgemäß aus einem Leichtmetall oder einer Leichtmetalllegierung hergestellt und als Flachprodukt ausgebildet. Unter den Oberbegriff "Flachprodukt" fallen dabei alle Bleche, Zuschnitte und sonstige Bauteile, deren Länge und Breite wesentlich größer ist als ihre Dicke. Flachprodukte dieser Art werden in der Regel durch Walzen aus einem Ausgangsprodukt hergestellt, das aus einem verformbaren Metallwerkstoff besteht. Bei dem Ausgangsprodukt kann es sich um eine Bramme, ein vorgewalztes oder gegossenes Band und desgleichen handeln. Abhängig von der Verformbarkeit des verarbeiteten Materials kann das Walzen als Warm- oder Kaltwalzen in ein oder mehreren Stufen durchgeführt werden.

Im Fall, dass der erfindungsgemäße Bodenbelag aus einem Werkstoff besteht, der in einem Extrusionsverfahren formbar ist, kann der erfindungsgemäße Bodenbelag auch durch Extrudieren, beispielsweise durch Strangpressen, erzeugt werden. Hierzu geeignete Werkstoffe sind beispielsweise Al- oder Mg-Legierungen.

Erfindungsgemäß ist in die freie Oberseite eines entsprechend erzeugten Bodenbelags durch ein formgebendes Verfahren ein Rippenprofil eingeprägt, das aus benachbart und mit Abstand zueinander verlaufenden Rippen gebildet ist, wobei zueinander benachbarte Rippen jeweils ein Tal seitlich begrenzen. Auch das Rippenprofil ist dabei durch ein formgebendes Verfahren in den Bodenbelag eingeformt, also beispielsweise durch Walzen, wobei das Rippenprofil im Zuge eines der Walzschritte oder einem gesonderten zusätzlichen Walzschritt eingewalzt wird, oder im Zuge der Extrusion direkt in den Bodenbelag eingeformt wird. Erfindungsgemäß umfasst nun das Rippenprofil mindestens eine Rastenzone, in der die Rippen des Rippenprofils durch Einprägungen, an denen die freie Kopffläche der Rippen in Richtung des Grunds der Täler des Rippenprofils abgesenkt ist, in Rippenabschnitte unterteilt sind. Gleichzeitig ist im Bereich der Rastenzone an der der Oberseite gegenüberliegenden Unterseite des Bodenbelags jedem Rippenabschnitt eine in den Bodenbelag eingeformte Ausnehmung zugeordnet. Die Ausnehmung ist von den jeweils nächst benachbarten Ausnehmungen durch jeweils einen Steg abgegrenzt, welcher entweder einem der Täler oder einer der Einprägungen des Rippenprofils zugeordnet ist.

Bei einem erfindungsgemäßen Bodenbelag sind demnach die Rippen des Rippenprofils im Bereich der Rastenzone einer zusätzlichen Verformung unterzogen worden, nämlich einem Prägeverfahren, bei dem das Material der Rippen zur Unterseite des Bodenbelags hin verdrängt worden ist. Das derart im Bereich der jeweiligen Einprägung verdrängte Material bildet dabei jeweils einen Steg, durch den eine im Bereich der jeweils durch die Einprägung unterbrochenen Rippe an der Unterseite des Bodenbelags vorhandene Ausnehmung gegenüber einer benachbarten Ausnehmung abgegrenzt ist. Die von den Rippen durch die Einprägungen abgetrennten Rippenabschnitte bilden somit voneinander separierte Erhebungen, die formschlüssig mit entsprechenden Ausnehmungen im Sicherungsfuß eines auf der Ladefläche abzustützenden Bauteils zusammenwirken können.

Wesentlich für die Erfindung ist dabei, dass die Formgebung des erfindungsgemäßen Bodenbelags ausschließlich mit Hilfe formgebender Verfahren erfolgt. D.h., nicht nur der Bodenbelag als solcher, sondern auch sämtliche an ihm vorhandenen Rippen und sonstigen für die Abstützung eines Bauteils oder eines Transportguts benötigten Formstrukturen werden durch eine Umformoperation erzeugt. Dazu ist der erfindungsgemäße Bodenbelag so ausgelegt, dass auch das bei der Formung der Rastenzone fließende Material in einen Raum ausweichen kann, der hierzu an der Unterseite des Bodenbelags vorgesehen ist. Die durch das Einformen der Einprägungen in die Rippen jeweils verdrängte Materialmenge bildet die Stege, durch die an der Unterseite des Bodenbelags vorhandene Ausnehmungen an jeweils einer ihrer Seiten umgrenzt sind. Auf diese Weise können die Einprägungen eine maximale Tiefe erhalten. Diese kann so groß sein, dass der Grund der Einprägungen in derselben Ebene liegt, wie der Grund der zwischen den zueinander benachbarten Rippen eingegrenzten Täler. Im Ergebnis wird so eine Rastenzone erreicht, in denen die verbleibenden Rippenabschnitte vereinzelte, höckerartige Erhebungen mit einer eindeutig definierten geometrischen Form bilden. So können durch eine entsprechende Anordnung und Formgebung der Einprägungen die durch die Einprägungen abgetrennten Rippenabschnitte die Grundform eines Pyramidenstumpfes erhalten. Derart geformte Erhebungen bieten optimale Voraussetzungen für ein formschlüssiges, selbstzentrierendes Zusammenwirken mit entsprechend geformten Ausnehmungen, die an der Fußfläche des jeweils auf die Rastenzone aufzusetzenden Sicherungsfußes vorgesehen sind.

Hinsichtlich der Verarbeitungszeit und des Maschineneinsatzes aufwändige spanabhebende Verfahren kommen erfindungsgemäß zur Erzeugung der Rastenzonen nicht zum Einsatz. Vielmehr werden ausschließlich umformende Prozessschritte durchgeführt, die ein konstantes Materialvolumen des Bodenbelags voraussetzen. Dementsprechend kostengünstig lässt sich ein erfindungsgemäßer Bodenbelag erzeugen.

Die erfindungsgemäße Formgebung des erfindungsgemäßen Bodenbelags ist das Resultat der erfindungsgemäßen Art und Weise der Herstellung. Diese sieht vor, dass zunächst
a) ein im Sinne eines Flachprodukts flacher Bodenbelag durch ein formgebendes Umformverfahren hergestellt wird, wobei der Bodenbelag mindestens einen Rippenprofilabschnitt aufweist, in dem an der Oberseite des Bodenbelags benachbart und mit Abstand zueinander verlaufende Rippen vorhanden sind, von denen die zueinander benachbarten Rippen jeweils durch ein Tal getrennt sind, und in dem an der Unterseite des Bodenbelags jeder Rippe eine sich entlang der jeweiligen Rippe erstreckende Rille sowie jedem Tal jeweils ein sich entlang des jeweiligen Tals erstreckender Steg zugeordnet ist.
b) Anschließend werden Einprägungen in die einer Rastenzone zugeordneten Rippen des Rippenprofilabschnitts eingeformt, wobei im Zuge des Einformens das im Bereich der jeweiligen Einprägung zuvor vorhandene Material der jeweiligen Rippe in die der betreffenden Rippe zugeordnete Rille an der Unterseite des Bodenbelags gedrängt wird und dort einen Steg bildet, der eine an der Unterseite gebildete Ausnehmung an ihrer einen Seite begrenzt.

Das "Einformen" der Einprägungen in die jeweiligen Rippen kann beispielsweise durch Drücken oder Pressen mittels eines geeigneten Stempels oder durch Einwalzen erfolgen. Besonders einfach lassen sich die Einprägungen erzeugen, wenn der Bodenbelag nach einem vorangegangenen Formgebungsschritt noch warm ist und das Material, aus dem der Bodenbelag besteht, einen minimierten Verformungswiderstand besitzt. Dies ist beispielsweise dann der Fall, wenn der Bodenbelag zunächst durch Extrusion oder Warmwalzen seine Grundform und das Rippenprofil erhält und unmittelbar anschließend die Einprägungen in das noch warme Bodenbelagsmaterial eingedrückt werden.

Als besonders günstig erweist sich die erfindungsgemäße Gestaltung und Herstellung demgemäß dadurch, dass der Bodenbelag aus einem Leichtmetallwerkstoff, insbesondere einem Al- oder Mg-Werkstoff, besteht.

Als aus fertigungstechnischer Sicht besonders vorteilhaft erweist sich eine Ausgestaltung der Erfindung, bei der sich das Rippenprofil in eine Hauptrichtung des Bodenbelags erstreckt, wobei das Rippenprofil mindestens einen sich ebenfalls in diese Hauptrichtung erstreckenden Rippenprofilabschnitt umfasst, in dem die Rastenzone ausgebildet ist. In diesem Fall verlaufen zumindest im Bereich des betreffenden Rippenprofilabschnitts die Rippen des Rippenprofils linear parallel zur Hauptrichtung. Bei der "Hauptrichtung" kann es sich dabei um die Längs- oder Quererstreckung des Bodenbelags handeln. Bei einem erfindungsgemäßen Bodenbelag sind dann sowohl auf der dem Laderaum zugewandten Oberseite wie auch auf der Unterseite des Bodenbelags im Bereich des Rippenprofilabschnitts, in den die jeweilige Rastenzone fällt, in Längsrichtung in Linien verlaufende Erhebungen und Vertiefungen vorgesehen, wobei räumlich mit einer Vertiefung auf der Oberseite eine Erhebung auf der Bodenbelagsunterseite korrespondiert und umgekehrt mit einer Erhebung auf der Oberseite eine Vertiefung auf der Bodenbelagsunterseite korrespondiert.

Die Tiefe der an der Unterseite des erfindungsgemäßen Bodenbelags vorgesehenen rillenförmigen Vertiefungen und die Höhe der an der Oberseite des Bodenbelags vorhandenen Rippen können bei erfindungsgemäßer Gestaltung und Herstellung problemlos so aufeinander abgestimmt werden, dass die der Unterseite zugeordneten Kopfflächen der durch die Einformung der Einprägungen jeweils entstandenen Stege gemeinsam in einer Ebene liegen. In Draufsicht auf die Unterseite gesehen ist dann im Bereich der jeweiligen Rastenzone in die Unterseite des Bodenbelags eine Waffelstruktur eingeformt, die durch gleichmäßig geformte Stege und Vertiefungen gekennzeichnet ist. Außerhalb der Rastenzone ist dagegen an der Unterseite den Rippen des Rippenprofilabschnitts jeweils eine in den Bodenbelag eingeformte, sich längs der zugeordneten Rippe erstreckende Rille zugeordnet, wobei an der Unterseite zueinander jeweils benachbarte Rillen durch jeweils einen Steg von einander abgegrenzt sind, der sich jeweils längs desjenigen Tals erstreckt, das von den Rippen begrenzt ist, denen die zueinander benachbarten durch den jeweiligen Steg getrennten Rillen zugeordnet sind.

Eine optimale Verklebung lässt sich dabei auch bei einem erfindungsgemäßen Bodenbelag dadurch ermöglichen, dass der Bodenbelag an seiner Unterseite außerhalb des Rippenprofilabschnitts, in den die Rastenzone fällt, eben ist. Liegen dabei der ebene Bereich der Unterseite und die Kopfflächen der jeweiligen an der Unterseite ausgebildeten Stege gemeinsam in einer Ebene, so kann auch im Bereich der Rastenzonen selbst noch eine optimierte Verklebung erzielt werden.

Nachfolgend wird die Erfindung anhand einer ein Ausführungsbeispiel darstellenden Zeichnung näher erläutert. Es zeigen jeweils schematisch:
- Fig. 1: ein Nutzfahrzeug in einer perspektivischen Ansicht von hinten;
- Fig. 2: einen Ausschnitt des Laderaums des in Fig. 1 dargestellten Nutzfahrzeugs in frontaler Ansicht;
- Fig. 3: einen Ausschnitt eines Bodenbelag-Rohteils in Draufsicht von oben;
- Fig. 4: den Ausschnitt des Bodenbelag-Rohteils gemäß Fig. 3 in frontaler Ansicht;

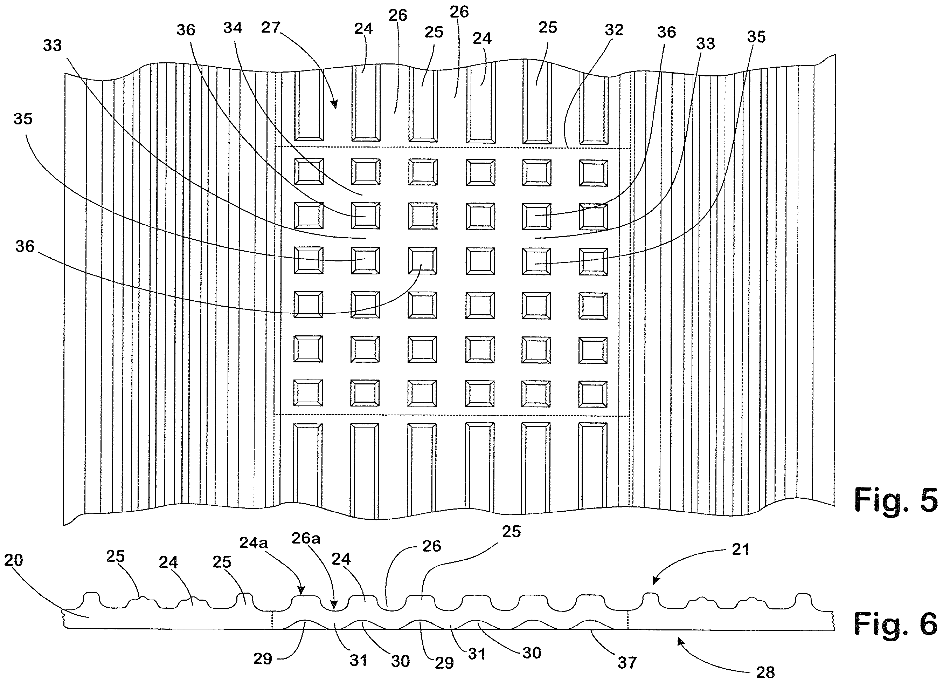

- Fig. 5: einen Ausschnitt eines aus dem Bodenbelag-Rohteil gemäß Fig. 1 fertig geformten Bodenbelags in Draufsicht von oben;
- Fig. 6: den Ausschnitt des Bodenbelags gemäß Fig. 5 in frontaler Ansicht;

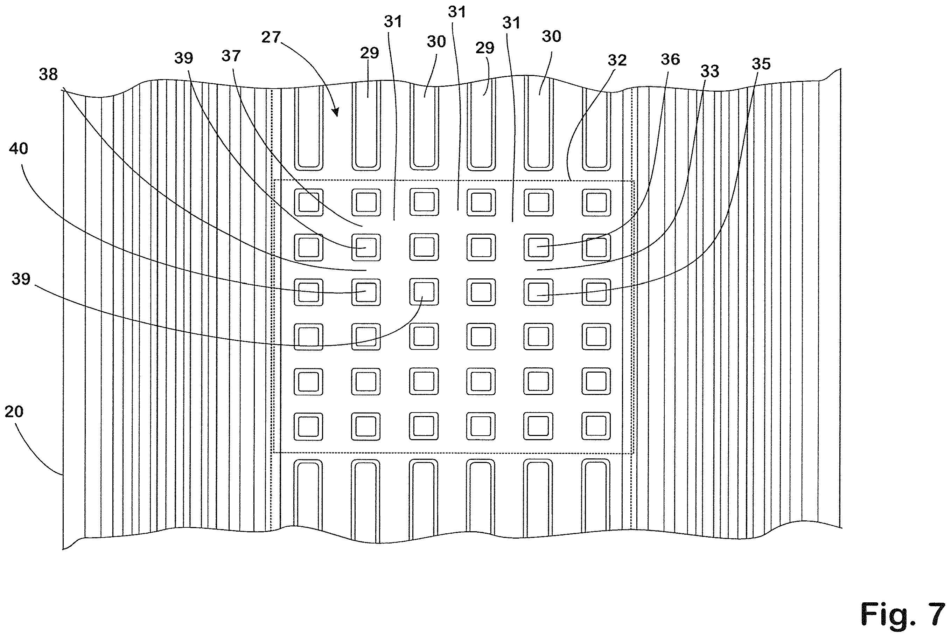

- Fig. 7: den Ausschnitt des Bodenbelags gemäß Fig. 5 in Draufsicht von unten.

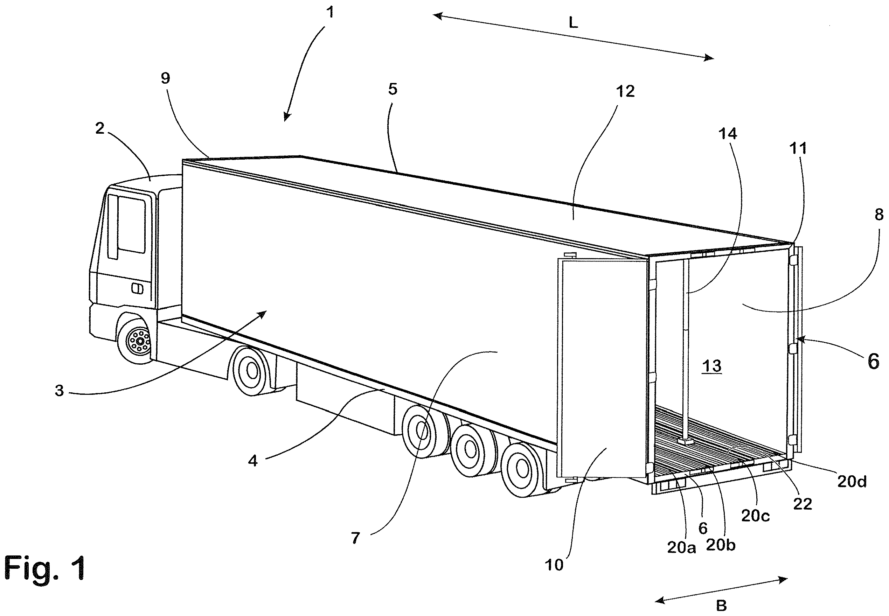

Bei dem in Fig. 1 gezeigten Nutzfahrzeug 1 handelt es sich um einen Sattelzug, der eine Zugmaschine 2 und einen von der Zugmaschine 2 gezogenen Sattelauflieger 3 umfasst, in der Fachsprache auch "Trailer" genannt. Der für den Transport von temperaturempfindlicher Ware ausgelegte Sattelauflieger 3 trägt auf einem Chassis 4 einen quaderförmigen Kofferaufbau 5, der durch einen Boden 6, Längsseitenwände 7,8, eine der Zugmaschine 2 zugeordnete Stirnwand 9, eine mit einer doppelflügeligen Türe 10 versehene Rückwand 11 und ein Dach 12 gebildet ist. An der Außenseite der Stirnwand 9 ist in bekannter Weise eine hier nicht sichtbare Transportkühlmaschine befestigt. Die Transportkühlmaschine kühlt die Atmosphäre im Laderaum 13, der vom Kofferaufbau 5 umgrenzt ist.

Um das jeweilige Transportgut im Laderaum 13 zu sichern, können im Laderaum 13 Sperrstangen 14 positioniert werden. Die Sperrstangen 14 weisen jeweils nach Art eines Teleskops längs ihrer gemeinsamen Längsachse ineinander und auseinander bewegbare, in ihrer jeweiligen Stellung arretierbare Stützrohre 15, 16 auf. Zusätzlich tragen die Sperrstangen 14 jeweils an ihrem dem Boden 6 zugeordneten Ende einen Stützfuß 17 und an ihrem dem Dach 12 zugeordneten Ende einen Stützkopf 18. Indem die Stützrohre 15,16 auseinander bewegt werden, können die Sperrstangen 14 in an sich bekannter Weise zwischen dem Dach 12 und dem Boden 6 verspannt werden.

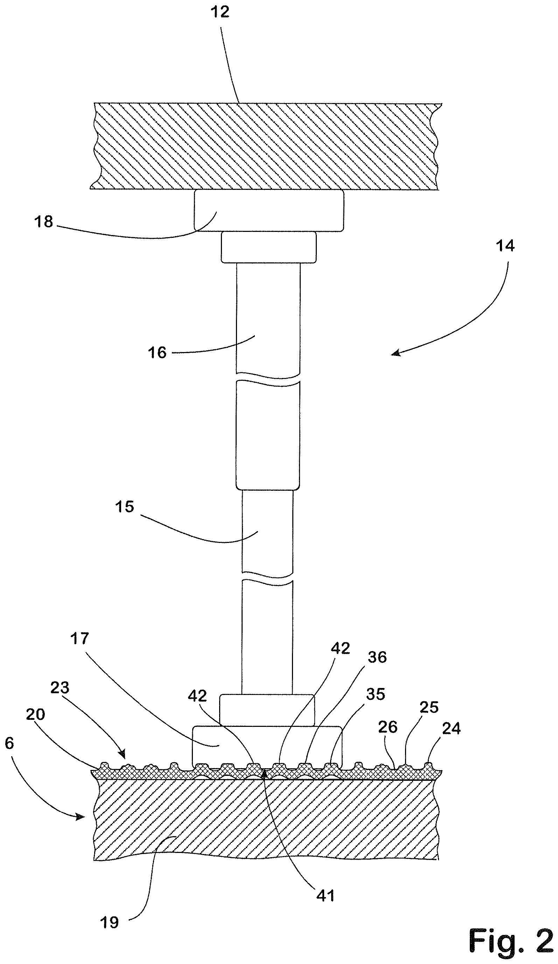

Der Boden 6 ist in an sich bekannter Weise als Tragkonstruktion aufgebaut, die neben der in Fig. 2 gezeigten Tragschicht 19 eine hier nicht dargestellte, die Tragschicht 19 tragende Balkenstruktur, deren Freiräume mit einem wärmeisolierenden Material gefüllt sind, und eine den Abschluss Bodens 6 zum Chassis 4 bildenden, hier ebenfalls nicht sichtbare Abschlussschicht umfasst. Die Tragschicht 19 besteht beim hier dargestellten Ausführungsbeispiel aus einem Holzwerkstoff, kann aber in der Praxis erforderlichenfalls als Sandwich mehrschichtig aus unterschiedlichen Werkstoffen zusammengesetzt sein.

An ihrer dem Laderaum 13 zugeordneten Oberseite ist die Tragschicht 19 mit einem Bodenbelag 20 belegt, der in herkömmlicher Weise mittels eines geeigneten Klebers mit der Tragschicht 19 verklebt ist.

Der Bodenbelag 20 besteht aus einem Aluminiumwerkstoff und ist aus mehreren separat voneinander hergestellten und miteinander verschweißten Längsstreifen 20a,20b,20c,20d zusammengesetzt. Die Längsstreifen 20a-20d erstrecken sich dabei jeweils über die in Längsrichtung L des Sattelaufliegers 3 gemessene Länge des Bodens 6, wogegen ihre Breite hier beispielweise jeweils einem Viertel der Breite B des Bodens 6 entspricht. Bei der Längsrichtung L handelt es sich um eine Hauptrichtung des Bodens 6.

Die freie Oberseite 21 des Bodenbelags 20 bildet die Ladefläche 22, auf der für den Transport das zu transportierende Gut abgestellt wird. In die freie Oberseite 21 der Längsstreifen 20a-20d des Bodenbelags 20 ist jeweils ein Rippenprofil 23 eingeprägt, das aus benachbart und in Richtung der Breite B des Bodens 6 mit Abstand zueinander verlaufende Rippen 24,25 gebildet ist, die sich jeweils parallel zueinander in Längsrichtung L über die Länge des Bodens 6 erstrecken. Zueinander benachbarte Rippen 24,25 begrenzen dabei zwischen sich jeweils ein Tal 26 an dessen Längsseiten. Die Rippen 24,25 können unterschiedliche Formen haben, um unterschiedliche Funktionen zu erfüllen. So können einige der Rippen 24,25 schienenartig ausgebildet sein, um die Räder von Hubstaplern optimal abzustützen, mit denen die Ladefläche 22 beim Beladen mit Transportgut befahren werden kann, während andere Rippen 24,25 so geformt sind, dass sie sich in die in der Regel aus Holz bestehenden Paletten einschneiden und so einen optimalen Halt bieten, wenn die Paletten mit dem Transportgut auf der Ladefläche 22 abgesetzt sind.

Jeder der Längsstreifen 20a-20d des Bodenbelags 20 umfasst mindestens einen sich in Längsrichtung L erstreckenden Rippenprofilabschnitt 27, in dem nicht nur an der Oberseite 21 des Bodenbelags 20 Rippen 24,25 ausgebildet sind, sondern in dem auch an der der Tragschicht 19 zugeordneten Unterseite 28 des Bodenbelags 20 Rillen 29,30 eingeformt sind. Jeweils eine der Rillen 29,30 ist dabei einer der Rippen 24,25 zugeordnet und erstreckt sich achsparallel längs der jeweils zugeordneten Rippen 24,25. Zueinander benachbarte Rillen 29,30 sind dabei durch jeweils einen Steg 31 voneinander getrennt, der jeweils dem Tal 26 zugeordnet ist, das von den Rippen 24,25 begrenzt ist, denen die durch den jeweiligen Steg 31 getrennte Rillen 29,30 zugeordnet sind. Außerhalb des jeweiligen Rippenprofilabschnitts 27 ist die Unterseite 28 der Längsstreifen 20a-20d des Bodenbelags 20 dagegen eben ausgebildet. Die dort so gebildete ebene Anlagefläche stellt eine optimale Verklebefläche für die Verklebung mit der Tragschicht 19 des Bodens 6 bereit.

In Längsrichtung L in regelmäßigen Abständen zueinander beabstandet sind in die Rippenprofilabschnitte 27 der Längsstreifen 20a-20d Rastenzonen 32 ausgebildet. Im Bereich der Rastenzonen 32 sind die Rippen des jeweiligen Rippenprofilabschnitts 27 durch Einprägungen 33,34 in Rippenabschnitte 35,36 unterteilt. Die Form des zur Erzeugung der Einprägungen 33,34 verwendeten Werkzeugs ist dabei so gewählt worden, dass die in der Rastenzone 32 verbleibenden Rippenabschnitte 35,36 die Form von Pyramidenstümpfen mit einer rechtwinkligen, insbesondere quadratischen Grundfläche aufweisen. Sie bilden als solche Rasten, die mit entsprechend geformten Ausnehmungen an auf dem Boden 6 abzustützenden Bauteilen zusammenwirken können. Die Einprägungen 33,34 sind dabei so tief in die Rippen 24,25 eingedrückt worden, dass die Kopffläche 24a der Rippen 24,25 bis auf das Niveau des Grunds 26a der Täler 26 des Rippenprofils 23 abgesenkt ist.

Das durch den Einprägevorgang im Bereich der Einprägungen 33,34 verdrängte Rippenvolumen ist in den an der Unterseite 28 durch die jeweils zugeordnete Rille 29,30 bereitgestellten Freiraum ausgewichen. Infolgedessen ist dort jeweils ein Steg 37,38 entstanden, der sich quer zur Längserstreckung L erstreckt und von der jeweiligen Rille 29,30 jeweils eine Ausnehmung 39,40 abgrenzt.

In der Rastenzone 32 ist dementsprechend jedem an der Oberseite 21 ausgebildeten Rippenabschnitt 35,36 eine der Ausnehmungen 39,40 zugeordnet. Genauso ist jeder Einprägung 33,34 an der Unterseite 28 des Bodenbelags 20 ein quer zur Längserstreckung L ausgerichteter Steg 37,38 zugeordnet. Die Ausnehmungen 39,40 an der Unterseite 28 sind dementsprechend jeweils durch einen der in Längsrichtung L sich erstreckenden, den Tälern 26 zugeordneten Stege 31 und die quer dazu ausgerichteten, den jeweiligen Einprägungen 33,34 zugeordneten Stegen 37,38 seitlich begrenzt.

Die Tiefe der Rillen 29,30 und die Höhe der Rippen 24,25 sind dabei so aufeinander abgestimmt, dass das im Bereich der Einprägungen 33,34 verdrängte Rippenvolumen die jeweilige Rille 29,30 soweit füllt, dass die der Unterseite 28 zugeordneten Kopfflächen der durch das verdrängte Volumen jeweils gebildeten Stege 37,38 gemeinsam in einer Ebene mit den ebenen Auflageflächen der Unterseite 28 des Bodenbelags 20 liegen. Auf diese Weise ist auch im Bereich der Stege 37,38 und 31 eine optimale Verklebefläche für die Verklebung mit der Tragschicht 19 bereitgestellt.

Um einen sicheren Halt der Sperrstangen 14 auf dem Boden 6 zu gewährleisten, sind in die Unterseite 41 des Stützfußes 17 der Sperrstangen 14 jeweils an die Form der Rippenabschnitte 35,36 der Rastenzonen 32 des Bodenbelags 20 angepasste Ausnehmungen 42 eingeformt. Wird der jeweilige Stützfuß 17 auf eine der Rastenzonen 32 gesetzt, so greifen die Rippenabschnitte 35,36 dementsprechend formschlüssig in die Ausnehmungen 42. Nachdem die Sperrstange 14 zwischen Boden 6 und Dach 12 verspannt ist, verhindert dieser Formschluss jede Bewegung der Stützfußes 17 in Längsrichtung L oder in Richtung der Breite B des Bodens 6. Damit einhergehend kann die so gesicherte Sperrstange 14 auch hohe Kräfte problemlos aufnehmen, die quer zu ihrer Längsachse wirken.

Zur Herstellung der Längsstreifen 20a-20d des Bodenbelags 20 wird in einer hier nicht gezeigten Produktionslinie in einem ersten Arbeitsschritt durch Strangpressen ein bandförmiges Flachprodukt aus einem auf eine ausreichende Verformungstemperatur erwärmtem Ausgangsmaterial erzeugt, bei dem es sich typischerweise um einen Al-Werkstoff handelt. Das bandförmige Flachprodukt dient als Bodenbelag-Rohteil, aus dem in weiteren Arbeitsschritten die Längsstreifen 20a-20d fertig geformt werden.

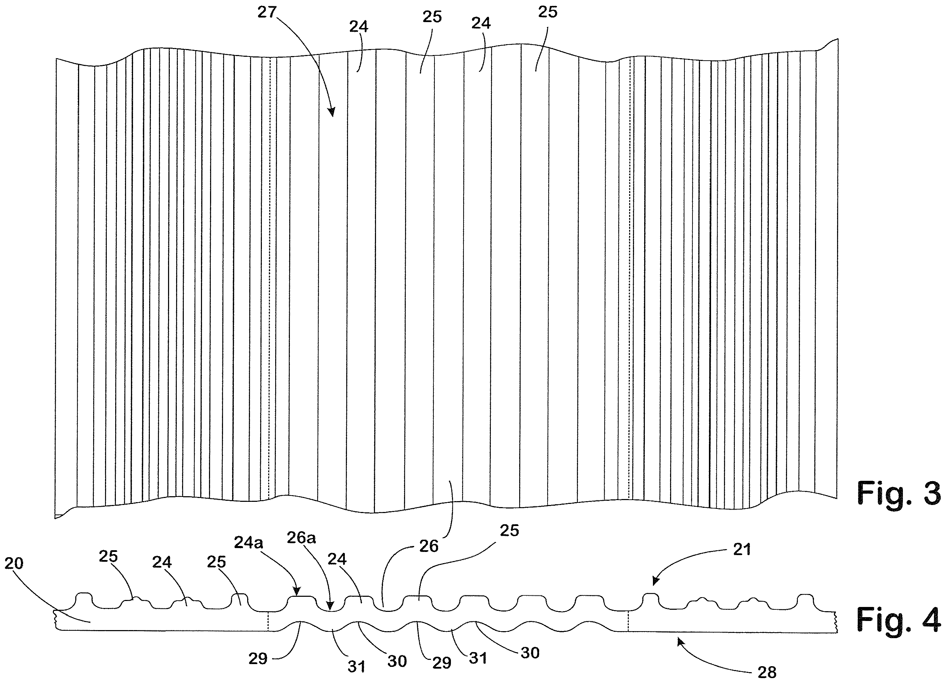

Beim Austritt aus dem Strangpresswerkzeug weist das Bodenbelag-Rohteil bereits das Rippenprofil 23 an der Oberseite 21 sowie, im Bereich des den Rippenprofilabschnitts 27, die Rillen 29,30 und die Stege 31 an der Unterseite 28 auf. Das aus der Strangpresseinrichtung austretende Bodenbelag-Rohteil hat in diesem Zustand dementsprechend die in den Figuren 3 und 4 dargestellte Form.

Unmittelbar anschließend werden die Einprägungen 33,34 mittels eines geeigneten Pressstempels, der aus einer normal zu dessen Oberseite ausgerichteten Richtung auf das nach wie vor noch warme und daher gut verformbare Bandmaterial gedrückt wird, in das Bodenbelag-Rohteil eingeformt. Selbstverständlich wäre es ebenso möglich, auch die Einprägungen 33,34 mittels einer Walze oder eines anderen Werkzeugs vorzunehmen. Das durch den Prägevorgang verdrängte Rippenvolumen wird dabei, wie oben bereits erläutert, in Richtung der Unterseite 28 des Bodenbelags 20 verdrängt und bildet im dort durch die Rillen 29,30 bereitgestellten Raum die Stege 37,38.

Abschließend werden von dem in der voranstehend beschriebenen Weise geformten noch bandförmigen Bodenbelag-Rohteil die Längsstreifen 20a-20d mit der erforderlichen Länge abgelängt. Die fertig geformten und nun abgekühlten und verfestigten Längsstreifen 20a-20d werden schließlich nebeneinander angeordnet und miteinander zu dem Bodenbelag 20 verschweißt. Daraufhin wird der Bodenbelag 20 mit der Tragschicht 19 verklebt und der Boden 6 fertig montiert.

### BEZUGSZEICHEN

- 1: Nutzfahrzeug
- 2: Zugmaschine
- 3: Sattelauflieger
- 4: Chassis des Sattelaufliegers 3
- 5: Kofferaufbau
- 6: Boden des Kofferaufbaus 5
- 7,8: Längsseitenwände des Kofferaufbaus 5
- 9: Stirnwand des Kofferaufbaus 5
- 10: doppelflügelige Türe der Rückwand 11
- 11: Rückwand des Kofferaufbaus 5
- 12: Dach des Kofferaufbaus 5
- 13: Laderaum des Kofferaufbaus 5
- 14: Sperrstange
- 15,16: Stützrohre der Sperrstange 14
- 17: Stützfuß der Sperrstange 14
- 18: Stützkopf der Sperrstange 14
- 19: Tragschicht des Bodens 6
- 20: Bodenbelag des Bodens 6
- 20a - 20d: Längsstreifen des Bodenbelags 20
- 21: freie Oberseite des Bodenbelags 20
- 22: Ladefläche des Nutzfahrzeugs 1
- 23: Rippenprofil
- 24,25: Rippen des Rippenprofils 23
- 24a: Kopffläche der Rippen 24,25
- 26: Tal des Rippenprofils 23
- 26a: Grund der Täler 26 des Rippenprofils 23
- 27: Rippenprofilabschnitt des Bodenbelags 20
- 28: Unterseite des Bodenbelags 20
- 29,30: Rillen des Rippenprofilabschnitts 27
- 31: Steg des Rippenprofilabschnitts 27
- 32: Rastenzone
- 33,34: Einprägungen
- 35,36: Rippenabschnitte
- 37,38: Stege
- 39,40: Ausnehmungen an der Unterseite 28 des Bodenbelags 20
- 41: Unterseite des Stützfußes 17
- 42: Ausnehmungen an der Unterseite 41 des Stützfußes 17

- B: Breite des Bodens 6
- L: Längsrichtung des Sattelaufliegers 3 (Hauptrichtung)

## Patentansprüche

1. Bodenbelag für einen Boden eines Nutzfahrzeugs, wobei der Bodenbelag (20) aus einem Leichtmetall oder einer Leichtmetalllegierung hergestellt und als Flachprodukt ausgebildet ist und in seine freie Oberseite (21) durch ein formgebendes Verfahren ein Rippenprofil (23) eingeprägt ist, das aus benachbart und mit Abstand zueinander verlaufenden Rippen (24,25) gebildet ist, wobei zueinander benachbarte Rippen (24,25) jeweils ein Tal (26) des Rippenprofils (23) seitlich begrenzen,
**dadurch gekennzeichnet, dass** das Rippenprofil (23) mindestens eine Rastenzone (32) umfasst, in der die Rippen (24,25) des Rippenprofils (23) durch Einprägungen (33,34), an denen die freie Kopffläche (24a) der Rippen (24,25) in Richtung des Grunds (26a) der Täler (26) des Rippenprofils (23) abgesenkt ist, in Rippenabschnitte (35,36) unterteilt sind, **dass** im Bereich der Rastenzone (32) an der der Oberseite (21) gegenüberliegenden Unterseite (28) des Bodenbelags (20) jedem Rippenabschnitt (35,36) eine in den Bodenbelag (20) eingeformte Ausnehmung (39,40) zugeordnet ist, die von den jeweils nächst benachbarten Ausnehmungen (39,40) durch jeweils einen Steg (37,38) abgegrenzt ist, welcher entweder einem der von den Rippen (24,25) begrenzten Täler (26) oder einer der Einprägungen (33,34) des Rippenprofils (23) zugeordnet ist, und **dass** die durch das Einformen der Einprägungen (33,34) in die Rippen (24,25) jeweils verdrängte Materialmenge die Stege (37,38) bildet, durch die die an der Unterseite (28) des Bodenbelags (20) vorhandenen Ausnehmungen (39,40) an jeweils einer ihrer Seiten umgrenzt sind.

2. Bodenbelag nach Anspruch 1, **dadurch gekennzeichnet, dass** er durch Strangpressen oder Walzen hergestellt ist.

3. Bodenbelag nach einem der voranstehenden Ansprüche, **dadurch gekennzeichnet, dass** sich das Rippenprofil (23) in eine Hauptrichtung (L) des Bodenbelags (20) erstreckt und **dass** das Rippenprofil (23) mindestens einen sich in diese Hauptrichtung (L) erstreckenden Rippenprofilabschnitt (27) umfasst, in dem die Rastenzone (32) ausgebildet ist.

4. Bodenbelag nach Anspruch 3, **dadurch gekennzeichnet, dass** außerhalb der Rastenzone (32) an der Unterseite (28) des Bodenbelags (20) den Rippen (24,25) des Rippenprofilabschnitts (27) jeweils eine in den Bodenbelag (20) eingeformte, sich längs der zugeordneten Rippe (24,25) erstreckende Rille (29,30) zugeordnet ist und **dass** an der Unterseite (28) zueinander jeweils benachbarte Rillen (29,30) durch jeweils einen Steg (31) voneinander abgegrenzt sind, der sich jeweils längs desjenigen Tals (26) erstreckt, das von den Rippen (24,25) begrenzt ist, denen die zueinander benachbarten durch den jeweiligen Steg (31) getrennten Rillen (29,30) zugeordnet sind.

5. Bodenbelag nach einem der voranstehenden Ansprüche, **dadurch gekennzeichnet, dass** die der Unterseite (28) zugeordneten Kopfflächen der jeweiligen Stege (31,37,38) gemeinsam in einer Ebene liegen.

6. Bodenbelag nach einem der voranstehenden Ansprüche, **dadurch gekennzeichnet, dass** er an seiner Unterseite (28) im Bereich außerhalb des Rippenprofilabschnitts (27) eben ist.

7. Bodenbelag nach Anspruch 5 und 6, **dadurch gekennzeichnet, dass** der ebene Bereich der Unterseite (28) und die Kopfflächen der jeweiligen an der Unterseite ausgebildeten Stege (31,37,38) gemeinsam in einer Ebene liegen.

8. Bodenbelag nach einem der voranstehenden Ansprüche, **dadurch gekennzeichnet, dass** die Rippenabschnitte (35,36) in der Rastenzone (32) die Grundform eines Pyramidenstumpfes aufweisen.

9. Nutzfahrzeugboden mit einer Trägerschicht (19) und einem gemäß einem der voranstehenden Ansprüche ausgebildeten Bodenbelag (20), der mit seiner Unterseite (28) auf die Trägerschicht (19) aufgeklebt ist und dessen freie Oberseite (21) eine Ladefläche (22) für ein auf dem Nutzfahrzeugboden (6) zu verstauendes Transportgut bildet.

10. Nutzfahrzeug mit einem Kofferaufbau (5), der einen Laderaum (13) umschließt, dessen Boden (6) durch einen gemäß Anspruch 9 beschaffenen Nutzfahrzeugboden gebildet ist, wobei in dem Laderaum (13) mindestens ein Bauteil (14) vorgesehen ist, das einen Stützfuß (17) aufweist, der an seiner Unterseite (41) Ausnehmungen (42) oder Erhebungen besitzt, die, wenn der Stützfuß (17) auf eine der Rastenzonen (32) an der freien Oberseite (21) des Bodenbelags (20) des Nutzfahrzeugbodens (6) aufgesetzt ist, formschlüssig mit den in der jeweiligen Rastenzone (32) ausgebildeten Rippenabschnitten (35,36) zusammenwirkt.

11. Verfahren zur Herstellung eines gemäß einem der Ansprüche 1 bis 8 ausgebildeten Bodenbelags (20) umfassend folgende Arbeitsschritte:
a) Herstellen eines flachen, aus einem Leichtmetallwerkstoff hergestellten Bodenbelag-Rohteils durch ein formgebendes Umformverfahren, wobei das Bodenbelag-Rohteil mindestens einen Rippenprofilabschnitt (27) aufweist, in dem an der Oberseite des Bodenbelag-Rohteils benachbart und mit Abstand zueinander verlaufende Rippen (24,25) vorhanden sind, von denen die zueinander benachbarten Rippen (24,25) jeweils durch ein Tal (26) getrennt sind, und in dem an der Unterseite (28) des Bodenbelag-Rohteils jeder Rippe (24,25) eine sich entlang der jeweiligen Rippe (24,25) erstreckende Rille (29,30) sowie jedem Tal (26) jeweils ein sich entlang des jeweiligen Tals (26) erstreckender Steg (31) zugeordnet ist;
b) Fertigformen des Bodenbelags (20) durch Einformen von Einprägungen (33,34) in die einer Rastenzone (32) zugeordneten Rippen (24,25) des Rippenprofilabschnitts (27) des Bodenbelag-Rohteils, wobei im Zuge des Einformens das im Bereich der jeweiligen Einprägung (33,34) zuvor vorhandene Material der jeweiligen Rippe (24,25) in die der betreffenden Rippe (24,25) zugeordnete Rille (29,30) an der Unterseite (28) des Bodenbelag-Rohteils gedrängt wird und dort einen Steg (37,38) bildet, der eine an der Unterseite (28) gebildete Ausnehmung an ihrer einen Seite begrenzt.

12. Verfahren nach Anspruch 11, **dadurch gekennzeichnet, dass** das Herstellen des Bodenbelag-Rohteils (Arbeitsschritt a)) durch Extrudieren eines Leichtmetallwerkstoffs erfolgt.

13. Verfahren nach Anspruch 11, **dadurch gekennzeichnet, dass** das Herstellen des Bodenbelag-Rohteils (Arbeitsschritt a)) durch Walzen eines Leichtmetallwerkstoffs erfolgt.

14. Verfahren nach Anspruch 11 bis 13, **dadurch gekennzeichnet, dass** das Bodenbelag-Rohteil beim Einformen der Einprägungen (33,34) (Arbeitsschritt b)) eine Temperatur aufweist, bei der der Verformungswiderstand des Werkstoffs, aus dem das Bodenbelag-Rohteil besteht, gegenüber einer Verformung bei Raumtemperatur vermindert ist.

## Claims

1. Floor covering for a floor of a commercial vehicle, wherein the floor covering (20) is produced from a light metal or a light metal alloy and is formed as a flat product and a rib profile (23) is impressed into its free top side (21) by a forming process and is composed of ribs (24, 25) running adjacently to and spaced apart from one another, wherein ribs (24, 25) adjacent to one another in each case laterally delimit a valley (26) of the rib profile (23), **characterised in that** the rib profile (23) comprises at least one engagement zone (32), in which the ribs (24, 25) of the rib profile (23) are divided into rib sections (35, 36) by indentations (33, 34) where the free top surface (24a) of the ribs (24, 25) is sunk in the direction of the bottom (26a) of the valleys (26) of the rib profile (23), **in that** in the area of the engagement zone (32) on the underside (28) of the floor covering (20) opposite the top side (21) a recess (39, 40) formed into the floor covering (20) is assigned to each rib section (35, 36) and is delimited from the next adjacent recesses (39, 40) in each case by a respective ridge (37, 38) which is either assigned to one of the valleys (26) delimited by the ribs (24, 25) or to one of the indentations (33, 34) of the rib profile (23), and **in that** the material quantity displaced in each case by forming the indentations (33, 34) into the ribs (24, 25) forms the ridges (37, 38), by which the recesses (39, 40) present on the underside (28) of the floor covering (20) are defined on one of their sides in each case.

2. Floor covering according to Claim 1, **characterised in that** it is produced by extrusion or rolling.

3. Floor covering according to any one of the preceding claims, **characterised in that** the rib profile (23) extends in a main direction (L) of the floor covering (20), and **in that** the rib profile (23) comprises at least one rib profile section (27) which extends in this main direction (L) and in which the engagement zone (32) is formed.

4. Floor covering according to Claim 3, **characterised in that** outside the engagement zone (32) on the underside (28) of the floor covering (20) a groove (29, 30) is assigned to the ribs (24, 25) of the rib profile section (27) in each case, this groove (29, 30) being formed into the floor covering (20) and extending along the assigned rib (24, 25), and **in that** on the underside (28) grooves (29, 30) adjacent to one another in each case are separated from one another by a ridge (31) in each case which extends along that valley (26) in each case which is delimited by the ribs (24, 25), to which the grooves (29, 30) adjacent to one another and separated by the respective ridge (31) are assigned.

5. Floor covering according to any one of the preceding claims, **characterised in that** the top surfaces of the respective ridges (31, 37, 38) assigned to the underside (28) lie together in one plane.

6. Floor covering according to any one of the preceding claims, **characterised in that** it is flat on its underside (28) in the area outside the rib profile section (27).

7. Floor covering according to Claims 5 and 6, **characterised in that** the flat area of the underside (28) and the top surfaces of the respective ridges (31, 37, 38) formed on the underside lie together in one plane.

8. Floor covering according to any one of the preceding claims, **characterised in that** the rib sections (35, 36) in the engagement zone (32) have the basic shape of a truncated pyramid.

9. Commercial vehicle floor having a carrier layer (19) and a floor covering (20) formed according to any one of the preceding claims which with its underside (28) is stuck onto the carrier layer (19) and the free top side (21) of which forms a loading floor (22) for an item of cargo which is to be loaded on the commercial vehicle (6).

10. Commercial vehicle having a box body (5) which encloses a loading space (13), the floor (6) of which is formed by a commercial vehicle floor provided according to Claim 9, wherein in the loading space (13) at least one component (14) is provided which has a support foot (17) which on its underside (41) has recesses (42) or elevations which, when the support foot (17) is placed onto one of the engagement zones (32) on the free top side (21) of the floor covering (20) of the commercial vehicle floor (6), interact in a form-fit manner with the rib sections (35, 36) formed in the respective engagement zone (32).

11. Method for producing a floor covering (20) formed according to any one of Claims 1 to 8 comprising the following steps:
a) producing a flat floor covering blank produced from a light metal material by means of a forming process, wherein the floor covering blank has at least one rib profile section (27), in which on the top side of the floor covering blank there are ribs (24, 25) running adjacently to and spaced apart from one another, of which the ribs (24, 25) adjacent to one another are in each case separated by a valley (26), and in which on the underside (28) of the floor covering blank a groove (29, 30) extending along the respective rib (24, 25) is assigned to each rib (24, 25) and a ridge (31) extending along the respective valley (26) is assigned to each valley (26) in each case;
b) completing the forming of the floor covering (20) by forming indentations (33, 34) into the ribs (24, 25) of the rib profile section (27) of the floor covering blank assigned to an engagement zone (32), wherein in the course of forming, the material of the respective rib (24, 25) previously present in the area of the respective indentation (33, 34) is pressed into the groove (29, 30) assigned to the respective rib (24, 25) on the underside (28) of the floor covering blank and forms a ridge (37, 38) there which delimits a recess formed on the underside (28) on its one side.

12. Method according to Claim 11, **characterised in that** the floor covering blank (production step a)) is produced by extruding a light metal material.

13. Method according to Claim 11, **characterised in that** the floor covering blank (production step a)) is produced by rolling a light metal material.

14. Method according to any one of Claims 11 to 13, **characterised in that** the floor covering blank when forming the indentations (33, 34) (production step b)) has a temperature, in which the deformation resistance of the material which the floor covering blank consists of is lowered compared to a deformation carried out at room temperature.

## Revendications

1. Revêtement de sol pour un plancher de véhicule utilitaire, où le revêtement de sol (20) est fabriqué à partir d'un métal léger ou d'un alliage de métal léger et est conçu en tant que produit plat et un profil rainuré (23) est gravé au niveau de son côté supérieur libre (21) à l'aide d'un procédé de façonnage qui est formé à partir des nervures (24, 25) étant adjacentes et passant à une distance l'une de l'autre, où les nervures adjacentes l'une à l'autre (24, 25) délimitent latéralement respectivement une vallée (26) du profil nervuré (23), **caractérisé en ce que** le profil nervuré (23) comporte au moins une zone d'encoches (32), dans laquelle les nervures (24, 25) du profil nervuré (23) sont subdivisées dans des sections de nervure (35, 36) par des estampages (33, 34), sur lesquels les surfaces de tête libres (24a) des nervures (24, 25) sont abaissées en direction du fond (26a) des vallées (26) du profil nervuré (23), et **en ce que**, dans la partie de la zone d'encoches (32), sur le côté inférieur (28) du revêtement de sol (20) opposé au côté supérieur (21), un évidement (39, 40), formé dans le revêtement de sol (20), est associé à chaque section de nervure (35, 36) et est délimité par les évidements adjacents (39, 40) respectivement les plus proches à l'aide de respectivement d'une traverse (37, 38) qui est associée soit à l'une des vallées (26) délimitées par les nervures (24, 25) ou à l'un des estampages (33, 34) du profil nervuré (23) et **en ce que** la quantité de matériau repoussé respectivement par le façonnage des estampages (33, 34) dans les nervures (24, 25) forme les traverses (37, 38), à l'aide desquelles les évidements (39, 40) présents sur le côté inférieur (28) du revêtement de sol (20) sont délimités sur respectivement un de leurs côtés.

2. Revêtement de sol selon la revendication 1, **caractérisé en ce qu'**il est fabriqué par extrusion ou laminage.

3. Revêtement de sol selon l'une des revendications précédentes, **caractérisé en ce que** le profil nervuré (23) s'étend dans une direction principale (L) du revêtement de sol (20) et **en ce que** le profil nervuré (23) comporte au moins une section de profil nervuré (27) s'étendant dans cette direction principale (L), dans laquelle est conçue la zone d'encoches (32).

4. Revêtement de sol selon la revendication 3, **caractérisé en ce qu'**à l'extérieur de la zone d'encoches (32), sur le côté inférieur (28) du revêtement de sol (20), une gorge (29, 30) formée dans le revêtement de sol (20) et s'étendant le long de la nervure associée (24, 25) est associé respectivement aux nervures (24, 25) de la section de profil nervuré (27) et **en ce que**, sur le côté inférieur (28), des gorges avoisinantes respectivement l'une à l'autre (29, 30) sont mutuellement délimitées par respectivement une traverse (31) qui s'étend respectivement le long de la vallée en question (26) qui est délimitée par les nervures (24, 25), auxquelles sont associées les gorges adjacentes l'une à l'autre (29, 30), séparées par la traverse correspondante (31).

5. Revêtement de sol selon l'une des revendications précédentes, **caractérisé en ce que** des surfaces de tête des traverses respectives (31, 37, 38) associées au côté inférieur (28) sont situées conjointement dans un même plan.

6. Revêtement de sol selon l'une des revendications précédentes, **caractérisé en ce qu'**il est plat sur son côté inférieur (28) dans une partie à l'extérieur de la section de profil nervuré (27).

7. Revêtement de sol selon la revendication 5 et 6, **caractérisé en ce que** la partie plate du côté inférieur (28) et les surfaces de tête des traverses respectives (31, 37, 38) conçues sur le côté inférieur sont situées conjointement dans un même plan.

8. Revêtement de sol selon l'une des revendications précédentes, **caractérisé en ce que** les sections de nervure (35, 36) présentent dans la zone d'encoches (32) la forme de base d'une pyramide tronquée.

9. Plancher de véhicule utilitaire pourvu d'une couche de support (19) et d'un revêtement de sol (20) conçu selon l'une des revendications précédentes, celui-ci étant collé avec son côté inférieur (28) sur la couche de support (19) et dont le côté supérieur libre (21) forme une surface de chargement (22) pour une marchandise transportée à ranger sur le plancher de véhicule utilitaire (6).

10. Véhicule utilitaire muni d'une structure de coffre (5) qui entoure un espace de chargement (13), dont le plancher (6) est formé par un plancher de véhicule utilitaire obtenu selon la revendication 9, où l'on prévoit dans l'espace de chargement (13) au moins un élément (14) qui présente un pied de support (17) qui possède sur son côté inférieur (41) des évidements (42) ou des protubérances qui, lorsque le pied de support (17) est posé sur une des zones d'encoches (32) sur le côté supérieur libre (21) du revêtement de sol (20) du plancher de véhicule automobile (6), interagissent par liaison de forme avec les sections de nervure (35, 36) conçues dans la zone d'encoches respective (32).

11. Procédé de fabrication d'un revêtement de sol (20) conçu selon l'une des revendications 1 à 8 comportant les étapes de travail suivantes :
a) Fabrication d'une pièce brute de revêtement de sol plane à base d'un matériau de métal léger par un procédé de déformation destiné à définir une forme, où la pièce brute de revêtement de sol présente au moins une section de profil nervuré (27), dans laquelle sont présentes, sur le côté supérieur de la pièce brute de revêtement de sol, des nervures (24, 25) étant adjacentes et passant à une distance l'une de l'autre, et dont les nervures adjacentes l'une à l'autre (24, 25) sont séparées respectivement par une vallée (26), et dans laquelle, sur le côté inférieur (28) de la pièce brute de revêtement de sol, une gorge (29, 30) s'étendant le long de la nervure (24, 25) respective est associée à chaque nervure (24, 25) ainsi qu'une traverse (31) s'étendant respectivement le long de la vallée respective (26) est associée à chaque vallée (26);
b) Finition du revêtement de sol (20) par façonnage des estampages (33, 34) dans les nervures (24, 25) de la section de profil nervuré (27) de la pièce brute de revêtement de sol associées à une zone d'encoches (32), où, dans le cadre du façonnage, le matériau précédemment disponible de la nervure respective (24, 25) dans la partie des estampages respectifs (33, 34) est poussé dans la gorge (29, 30) associée à la nervure concernée (24, 25) sur le côté inférieur (28) de la pièce brute de revêtement de sol et forme à cet endroit une traverse (37, 38) qui délimite au niveau de l'un de ses côtés un évidement formé sur le côté inférieur (28).

12. Procédé selon la revendication 11, **caractérisé en ce que** la fabrication de la pièce brute de revêtement de sol (étape de travail a)) a lieu par extrusion d'un matériau en métal léger.

13. Procédé selon la revendication 11, **caractérisé en ce que** la fabrication de la pièce brute de revêtement de sol (étape de travail a)) a lieu par laminage d'un matériau en métal léger.

14. Procédé selon la revendication 11 à 13, **caractérisé en ce que** la pièce brute de revêtement de sol présente, lors du façonnage des estampages (33, 34) (étape de travail b)), une température à laquelle la résistance à la déformation du matériau qui compose la pièce brute de revêtement de sol est réduite par rapport à une déformation ayant lieu à une température ambiante.
